# EUROPÄISCHE PATENTSCHRIFT

(11) **EP 1 002 429 B1**
(45) Veröffentlichungstag und Bekanntmachung des Hinweises auf die Patenterteilung: **22.05.2002**
(21) Anmeldenummer: 98947356.6
(22) Anmeldetag: 28.07.1998
(51) Int. Cl.: H04N 7/52

(54) **VERFAHREN ZUR AUFBEREITUNG EINES DATENSTROMES FÜR DIE OBJEKTBASIERTE CODIERUNG VON BEWEGTBILDFOLGEN**
METHOD FOR FORMATTING A DATA FLOW BY CODING BASED ON THE SEQUENCE OBJECTS OF ANIMATED IMAGES
PROCEDE DE MISE EN FORME D'UN COURANT DE DONNEES POUR LE CODAGE FONDE SUR LES OBJETS DE SEQUENCES D'IMAGES ANIMEES

(30) Priorität: 15.08.1997 DE 19735607
(43) Veröffentlichungstag der Anmeldung: 24.05.2000
(73) Patentinhaber: ROBERT BOSCH GMBH, 70442 Stuttgart (DE)
(72) Erfinder: WOLLBORN, Michael, D-30455 Hannover (DE)
(86) Internationale Anmeldenummer: DE9802132
(87) Internationale Veröffentlichungsnummer: WO9909749

(56) Entgegenhaltungen:
- ISO/IEC JTC1/SC29/WG11: "MPEG4 Video Verification Model Version 7.0" April 1997 , INTERNATIONAL ORGANISATION FOR STANDARDISATION, PAGE 108 , BRISTOL, GB XP002089554 in der Anmeldung erwähnt siehe Seite 108, Zeile 6 - Seite 108, letzte Zeile
- ISO/IEC JTC1/SC29/WG11: "Information Technology - Coding of Audio-Visual Objects: Visual, ISO/IEC 14496-2, Committee Draft" 29. Mai 1998 , INTERNATIONAL ORGANISATION FOR STANDARDISATION, PAGES 51-55, 107-114 XP002089555 siehe Seite 51, Zeile 1 - Seite 51, Zeile 14 siehe Seite 107, Zeile 15 - Seite 108, Zeile 8

## Beschreibung

### Stand der Technik

Die Erfindung betrifft ein Verfahren zur Aufbereitung eines Datenstromes für die objektbasierte Codierung von Bewegtbildfolgen, die beliebige Form und Größe aufweisen.

Beim MPEG-4 Video Verification Model Version 7.0, Bristol, April 1997, MPEG-97/N 1642, ISO/IEC JTC/SC 29/WG 11 ist ein Encoder und Decoder zur objektbasierten Codierung von Bewegtbildfolgen spezifiziert. Dabei werden innerhalb einer Videosession (VS) nicht mehr rechteckige Bilder fester Größe codiert und zum Empfänger übertragen, sondern sogenannte Video Objects (VO), welche beliebige Form und Größe aufweisen dürfen. Diese Videoobjekte können dann weiterhin noch in verschiedene Video Object Layer (VOL) unterteilt sein, um z.B. verschiedene Auflösungsstufen eines Videoobjektes darzustellen. Die Abbildung eines VO eines bestimmten Layers in der Kamerabildebene zu einem bestimmten Zeitpunkt wird als Video Object Plane (VOP) bezeichnet. Somit ist die Beziehung zwischen VO und VOP äquivalent zu der Beziehung zwischen Bildfolge und Bild im Falle der Übertragung rechteckiger Bilder fester Größe.

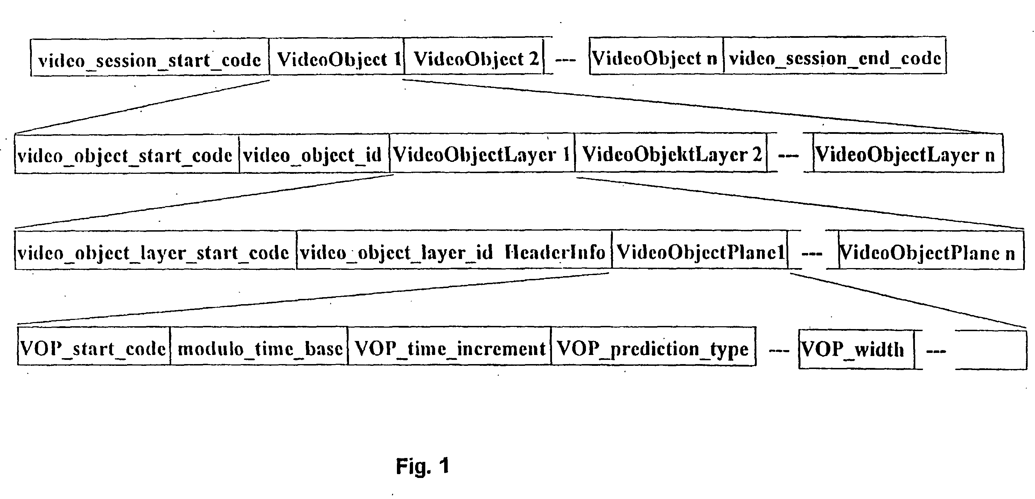

Die Syntax zur Übertragung eines VOP spezifiziert zum einen die Signalisierung der lokalen Zeitbasis eines VOP. Damit wird angegeben, zu welchem Zeitpunkt bezüglich bereits vorher übertragener VOPs der aktuelle VOP zur Anzeige zu bringen ist. Fig. 1 zeigt den Aufbau der Syntax für die Elemente VS, VO, VOL und der relevanten Teile für das Element VOP.

Relevant in diesem Zusammenhang sind hier die dargestellten Teile der Syntax des VOP. Dabei gibt das Element "modulo time base" die lokale Zeitbasis des VOP in Schritten von 1000 Millisekunden an, das Element "VOP time increment" gibt zusätzlich die lokale Zeitbasis in Schritten von 1 Millisekunde an. Das Element "VOP prediction type" gibt an, welche Art von Prädiktion für den VOP verwendet werden soll. Hier gibt es vier Möglichkeiten: I-VOP, d.h. es wird keine Prädiktion verwendet, P-VOP, d.h. die Prädiktion wird aus dem zeitlich vorhergehenden VOP vorgenommen, B-VOP, d.h. die Prädiktion wird aus dem zeitlich vorhergehenden und dem zeitlich folgenden VOP vorgenommen sowie der Fall S-VOP, bei dem die Prädiktion aus einem sogenannten SPRITE-VOP vorgenommen wird, welcher entweder zu Beginn der Video-Session einmalig übertragen oder während der Übertragung aus den rekonstruierten Daten gewonnen wird.

Zusätzlich zur Übertragung der lokalen Zeitbasis eines VOP spezifiziert die Syntax eine Möglichkeit zur Signalisierung des Zustandes "codiert/nicht codiert" für ein VOP. Dabei werden für den VOP im Falle des Zustandes "nicht codiert" nach den entsprechenden Signalisierungselementen keine weiteren Daten übertragen und es wird die Übertragung eines neuen VOP begonnen, sofern vorhanden. Auf der Empfängerseite wird ein "nicht codierter" VOP nicht weiter decodiert und nicht zur Anzeige gebracht.

Hierbei gibt das Element "video object layer shape" , welches im Bereich HeaderInfo der Syntax des zugehörigen VOL spezifiziert ist, an, ob es sich bei dem VO um ein rechteckiges VO (== O) oder um ein VO beliebiger Größe und Form (≠ O) handelt. Für den Fall eines VO beliebiger Größe und Form wird dann mit Hilfe des Elementes "VOP width" die Breite des das VOP umgebenden Rechtecks angegeben. Ist diese Breite auf den Wert O gesetzt, so signalisiert dies, daß der VOP den Zustand "nicht codiert" hat. Es wird dann die Übertragung der Daten des aktuellen VOP abgebrochen und mit der Übertragung des nächsten VOP begonnen.

### Vorteile der Erfindung

Mit den Maßnahmen der Erfindung, die in Anspruch 1 definiert ist, ist es möglich weniger Daten für ein nichtcodiertes Videoobjekts zu übertragen, d.h. für ein Videoobjekt, das nicht unmittelbar zur Anzeige zu bringen ist. Im Unterschied zum vorgenannten Stand der Technik ist die Verwendung eines eindeutigen Elements zur Signalisierung des Zustandes, ob ein Videoobjekt zur Anzeige zu bringen ist oder nicht einfacher und übersichtlicher.

Mit dem Verfahren nach der Erfindung ist es möglich, auch für rechteckige VOs den Zustand codiert/nicht codiert zu übertragen und somit zu signalisieren, was bei der Realisierung nach dem Stand der Technik nicht möglich ist.

Die Signalisierungsinformation, die angibt, ob ein Videoobjekt codiert oder nicht codiert ist, kann der lokalen Zeitbasisinformation im Datenstrom vor- oder nachgestellt sein. Bei der Voranstellung der Signalisierungsinformation müssen für einen nicht codierten VOP noch weniger Daten übertragen werden als bei der Einfügung der Signalisierungsinformation nach der lokalen Zeitbasis, da in diesem Falle die lokale Zeitbasisinformation nicht übertragen wird. Allerdings ist in diesem Falle das "Ausblenden" , d.h. die Unterdrückung der Anzeige eines Videoobjektes, nicht mehr zu einem ganz speziellen Zeitpunkt möglich, sondern nur noch zu dem auf den Empfang des nicht codierten VOPs nächstfolgenden Zeitpunkt, zu dem beim Empfänger ein Bild zur Anzeige gebracht wird.

### Beschreibung von Ausführungsbeispielen

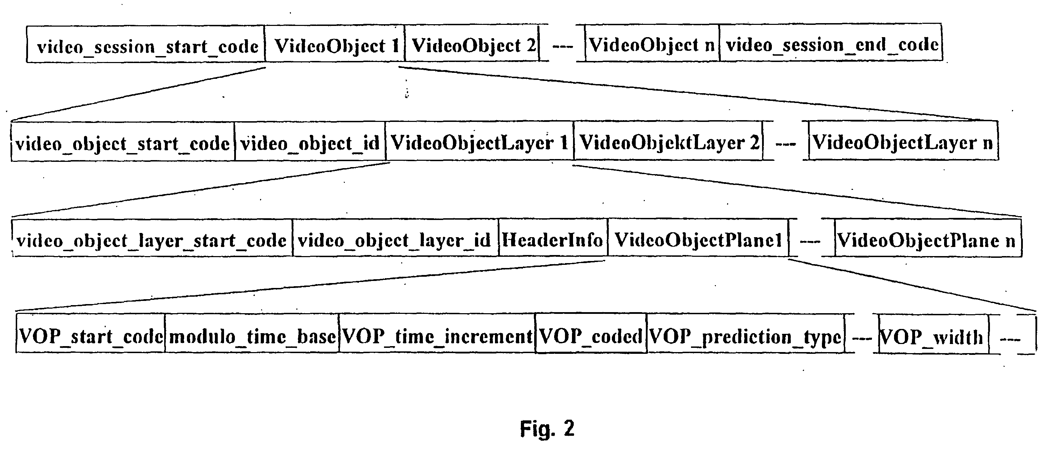

In Fig. 2 ist der Aufbau des Datenstromes für die Übertragung von Videoobjekten dargestellt. Zu Beginn (erste Zeile des Diagramms) wird das Element "video session start code" übertragen und anschließend die Informationen für die Videoobjekte 1, 2 ..., n. Am Schluß erscheint der "video session end code" . In der zweiten Zeile ist der Aufbau des Übertragungsformates für das "video object 1" dargestellt. Es beginnt mit dem "video object start code" gefolgt von der "video object identification" und den Elementen für die "video object layers" 1 bis n. Ein einzelnes Element "video object layer" ist in seinem Aufbau in der dritten Zeile dargestellt. Es beginnt mit dem "video object layer start code" gefolgt von der "video object layer identification" , dem "HeaderInfo" und den Elementen 1 bis n, für die "Video Object Plane" . In der yierten Zeile ist der Aufbau eines Einzelelementes "Video Object Plane" dargestellt. Es beginnt mit dem "VOP start code" , gefolgt von der lokalen Zeitbasisinformation "modulo time base" und dem Element "modulo time increment" .Dieser Aufbau stimmt soweit mit dem Aufbau gemäß Fig. 1 überein. In Abweichung zu Fig. 1 wird aber nun erfindungsgemäß stets ein neues Element in Form einer Signalisierungsinformation in den Datenstrom eingefügt, das angibt, ob das Videoobjekt für die Wiedergabe zu decodieren beziehungsweise zur Anzeige zu bringen ist. Die Einfügung der Signalisierungsinformation erfolgt auch unabhängig von der äußeren From eines Videoobjektes. Diese Signalisierungsinformation besteht aus dem Element "VOP coded" und ist so definiert, daß der Wert O den Zustand "nicht codiert" und der Wert 1 den Zustand "codiert" signalisiert. Für den Empfänger ist dabei zu definieren, daß das entsprechende VO für den Fall "VOP coded == O" zum Zeitpunkt, der durch die lokale Zeitbasis angegeben wird oder zum nächsten darauffolgenden Zeitpunkt, zu dem beim Empfänger ein Bild zur Anzeige gebracht wird, nicht mehr angezeigt wird. Die Signalisierung mittels des Elementes "VOP width" wird im Gegensatz zur Realisierung gemäß Fig. 1 nicht mehr durchgeführt.

Das Element "VOP coded" kann auch nach dem Element "VOP prediction type" in den Datenstrom eingefügt werden.

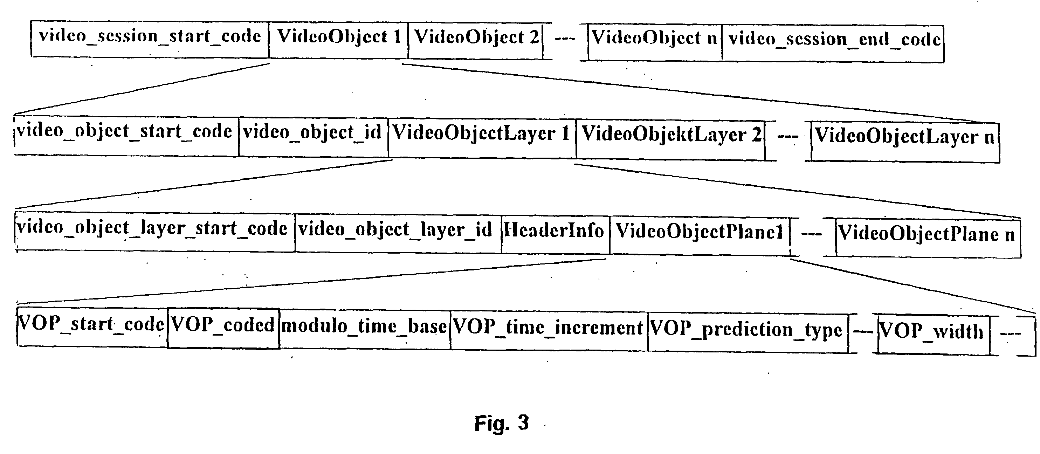

In Fig. 3 ist ein weiteres Ausführungsbeispiels der Erfindung dargestellt. Die Signalisierungsinformation "VOP coded" wird nun direkt nach dem Element "VOP start code" plaziert, d.h. vor der lokalen Zeitbasisinformation "modulo time base" . Auch für dieses Ausführungsbeispiel wird die Signalisierung mittels des Elementes "VOP width" nicht mehr durchgeführt. Im Unterschied zum ersten Ausführungsbeispiel (Fig. 2) müssen für einen nicht codierten VOP noch weniger Daten übertragen werden, da die lokale Zeitbasis nicht zu übertragen werden braucht. Allerdings ist in diesem Falle das "Ausblenden" , d.h. das nicht mehr zur Anzeige bringen eines VOs, nicht mehr zu einem ganz speziellen Zeitpunkt möglich, sondern nur noch zum auf den Empfang des "nicht codierten" VOPs nächstfolgenden Zeitpunkt, zu dem beim Empfänger ein Bild zur Anzeige gebracht wird.

## Patentansprüche

1. Verfahren zur Aufbereitung eines Datenstromes für die objektbasierte Codierung von Bewegtbildfolgen für Videoobjekte, die beliebige Form und Größe aufweisen, mit folgenden Schritten:
- Der eigentlichen Information über das Videoobjekt wird eine lokale Zeitbasisinformation vorangestellt, **dadurch gekennzeichnet, daß** vor oder nach dieser Zeitbaisisinformation unabhängig von der äußeren Form eines Videoobjektes stets eine Signalisierungsinformation in den Datenstrom eingefügt wird, die angibt, ob das Videoobjekt für eine Wiedergabe zu decodieren beziehungsweise zur Anzeige zu bringen ist.

2. Verfahren nach Anspruch 1, **dadurch gekennzeichnet, daß** die Signalisierungsinformation zwei Zustände für ein Videoobjekt angibt, nämlich den Zustand codiert und nicht codiert, wobei für den Zustand nicht codiert die Übertragung der Information über das Videoobjekt abgebrochen wird und die Anzeige für dieses Videoobjekt unterdrückt wird.

3. Verfahren nach Anspruch 1 oder 2, **dadurch gekennzeichnet, daß** für Videoobjekte, deren Signalisierungsinformation dem Zustand nicht codiert entspricht, das entsprechende Videoobjekt zu einem Zeitpunkt, der durch die lokale Zeitbasisinformation bestimmt ist, nicht mehr zur Anzeige gebracht wird.

4. Verfahren nach Anspruch 1 oder 2, **dadurch gekennzeichnet, daß** für Videoobjekte, deren Signalisierungsinformation dem Zustand nicht codiert entspricht, das entsprechende Videoobjekt zu dem auf den Zeitpunkt, der durch die lokale Zeitbasisinformation bestimmt ist, nächstfolgenden Zeitpunkt zu dem eine Anzeige erfolgen sollte, nicht mehr zur Anzeige gebracht wird.

## Claims

1. Method for conditioning a data stream for the object-based coding of moving picture sequences for video objects which have any desired form and size, having the following steps:
- the actual information about the video object is preceded by a local timebase information item, **characterized in that** a signalling information item is always inserted into the data stream before or after the said timebase information item, independently of the external form of a video object, which signalling information item specifies whether the video object is to be decoded for reproduction or is to be displayed.

2. Method according to Claim 1, **characterized in that** the signalling information specifies two states for a video object, namely the coded and not coded states, in which case, for the not coded state, the transmission of the information about the video object is terminated and the display is suppressed for this video object.

3. Method according to Claim 1 or 2, **characterized in that**, for video objects whose signalling information corresponds to the not coded state, the corresponding video object is no longer displayed at an instant which is determined by the local timebase information.

4. Method according to Claim 1 or 2, **characterized in that**, for video objects whose signalling information corresponds to the not coded state, the corresponding object is no longer displayed at the next instant - after the instant which is determined by the local timebase information - at which a display should be effected.

## Revendications

1. Procédé de mise en forme d'un courant de données pour le codage basé sur objet de séquences d'images animées pour des objets vidéo qui ont une forme et une dimension quelconques, comprenant les étapes suivantes :
- une information de base de temps locale précède l'information proprement dite concernant l'objet vidéo,
**caractérisé en ce qu'**
avant ou après cette information de base de temps, indépendamment de la forme extérieure d'un objet vidéo, on ajoute toujours dans le courant de données une information de signalisation qui indique si l'objet vidéo doit être décodé pour la reproduction ou être reporté pour l'affichage.

2. Procédé selon la revendication 1,
**caractérisé en ce que**
l'information de signalisation indique deux états pour un objet vidéo, à savoir l'état codé et l'état non codé, et pour l'état non codé, la transmission de l'information pour l'objet vidéo est arrêtée et l'affichage de cet objet vidéo est bloqué.

3. Procédé selon l'une quelconque des revendications 1 ou 2,
**caractérisé en ce que**
pour des objets vidéo dont l'information de signalisation correspond à l'état non codé, l'objet vidéo correspondant n'est plus affiché à un instant qui est défini par l'information de base de temps locale.

4. Procédé selon l'une quelconque des revendications 1 ou 2,
**caractérisé en ce que**
pour des objets vidéo dont l'information de signalisation correspond à l'état non codé, l'objet vidéo correspondant n'est plus mis à l'affichage à l'instant auquel devait se faire un affichage, et qui suit immédiatement l'instant défini par l'information de base de temps locale.
